# EUROPEAN PATENT SPECIFICATION

(11) **EP 1 270 134 B1**
(45) Date of publication and mention of the grant of the patent: **30.08.2006**
(21) Application number: 02013265.0
(22) Date of filing: 17.06.2002
(51) Int. Cl.: B23K 11/30, B24B 19/00

(54) **Chip collecting apparatus for electrode tip dresser**
Vorrichtung zum Sammeln von Spänen für ein Gerät zum Nachbearbeiten von Elektrodenspitzen
Dispositif de rassemblement des puces pour un appareil de dressage pour pointe d'électrode

(30) Priority: 20.06.2001 JP 2001186937; 27.06.2001 JP 2001195082
(43) Date of publication of application: 02.01.2003
(73) Proprietor: FUJI JUKOGYO KABUSHIKI KAISHA, Tokyo (JP)
(72) Inventor: Sakai, Kensuke, Shinjuku-ku, Tokyo (JP)
(74) Representative: Bohnenberger, Johannes

(56) References cited:
- EP-A- 0 031 470
- EP-A- 1 186 369
- US-B1- 6 186 876
- PATENT ABSTRACTS OF JAPAN vol. 008, no. 253 (M-339), 20 November 1984 (1984-11-20) & JP 59 127979 A (TOYOTA JIDOSHA KK), 23 July 1984 (1984-07-23)

## Description

The present invention relates to a chip collecting apparatus for a tip dresser for collecting chips generated when dressing electrode tips.

### Description of the Related Art

Conventionally, electrode tips used for spot welding or the like are worn out (or deformed) when welding work is repeated. When welding work is performed with a worn-out electrode tip, welding of desired quality cannot be obtained; accordingly, electrode tips are periodically dressed to maintain welding quality.

For example, Japanese Unexamined Patent Application Publication No. 6-122082 discloses a tip dresser for dressing electrode tips in which after the upper and lower surfaces of a dressing body have been tightly pressed by a pair of electrode tips provided at opposed ends of a welding gun, and the welding gun is swung around the central axis of each electrode tip for grinding, thereby dressing the electrode tips. EP-A1*-* 1 186 369 shows state of the art according to Art. 54 (3) EPC.

Recently, the recycle of chips is contemplated in view of cost reduction and environmental issues. Accordingly, a collection vessel is disposed under the dressing body to recycle the collected chips.

However, there is a problem in that the chips tend to be released by the relative swing or rotation of the dressing body and the electrode tips during grinding work, and all the chips cannot be collected into the collection vessel, resulting in a low collection rate.

Furthermore, when air is blown to the dressing body to prevent clogging of the dressing body, the chips are released by the blown air, so that the collection rate of the chips is further decreased.

Generally, copper is often used as an electrode tip for spot welding and the like. In order to maintain a proper welding quality, the frequency of grinding is increased to increase the amount of ground chips of the electrode tip, so that, in order to reduce material cost, it is necessary to increase the collection rate of the chips and effectively recycle them.

For this purpose, various techniques are proposed in which a chip collecting apparatus is mounted on the dresser main body having a dressing body for collecting chips generated during dressing the electrode tips.

For example, Japanese Examined Utility Model Publication No. 3-18067 discloses a technique of collecting chips generated during polishing or grinding electrode tips in such a way that a cover main body is mounted on a dresser main body, and an air inlet and an air outlet are formed between the upper and lower surfaces of the cover main body and the dresser main body. Compressed air after driving a dressing body held by a holder is guided through the air inlet to the holder, and then the compressed air is guided through the air outlet to a chip collection vessel connected to the end of the cover main body.

Since the chip collecting apparatus disclosed in this prior art collects the chips using compressed air, it is necessary to provide an air inlet and an air outlet for guiding the compressed air to the periphery of the dressing body, posing a problem of complicating the structure.

Also, since compressed air after driving the dressing body is used, it cannot be assembled to a tip dresser that does not use the compressed air as a driving source, thus providing poor operability.

### SUMMARY OF THE INVENTION

Accordingly, it is an object of the present invention to provide a chip collecting apparatus for a tip dresser capable of achieving downsizing and excellent versatility with a simple structure and also efficiently collecting generated chips.

In the chip collecting apparatus for a tip dresser according to the present invention, in a tip dresser for dressing the electrode tips in such a way that a dressing body held in a dresser main body is tightly pressed by a pair of opposed electrode tips and the dressing body and the pair of electrode tips are relatively slid, a chip pickup case covering the dressing body is secured to the dresser main body; tip insertion ports are opened at positions of the chip pickup case, into which the pair of electrode tips are inserted; a shielding member is disposed at the each tip insertion port for allowing the insertion of the electrode tip by elastic deformation; and a chip discharge port is

The dresser main body is supported in a state in which cutters provided on both sides of the dressing body are oriented in a substantially horizontal direction, and surfaces of the chip pickup case, in which the tip insertion ports are opened, are formed in a wedge shape expanding from the front end to the rear end with respect to the advancing direction of the pair of electrode tips. Further, the advancing direction of the pair of electrode tips is one of horizontal and upward.

The above and other objects, features and advantages of the invention will become more clearly understood from the following description referring to the accompanying drawings.

### BRIEF DESCRIPTION OF THE DRAWINGS

Fig. 1 is a perspective view of a chip collecting apparatus according to a first embodiment of the present invention;
Fig. 2 is a sectional plan view of an essential part of the apparatus of Fig. 1;
Fig. 3 is a perspective view of a chip collecting apparatus according to a second embodiment of the invention;
Fig. 4 is a sectional plan view of an essential part of the apparatus of Fig. 3;

### DESCRIPTION OF THE PREFERRED EMBODIMENTS

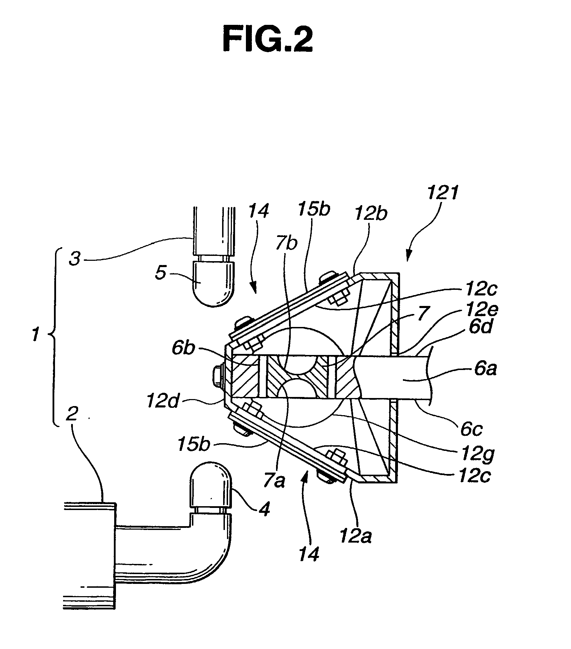

Referring to Fig. 2, a welding gun 1 connected to a welding robot is provided with first and second gun arms 2 and 3, to the ends of which electrode tips 4 and 5 are removably attached to face each other. The electrode tips 4 and 5 are coaxially disposed and are relatively brought into close proximity to and apart from each other by advancing/retracting motions of at least one of the gun arms 2 and 3.

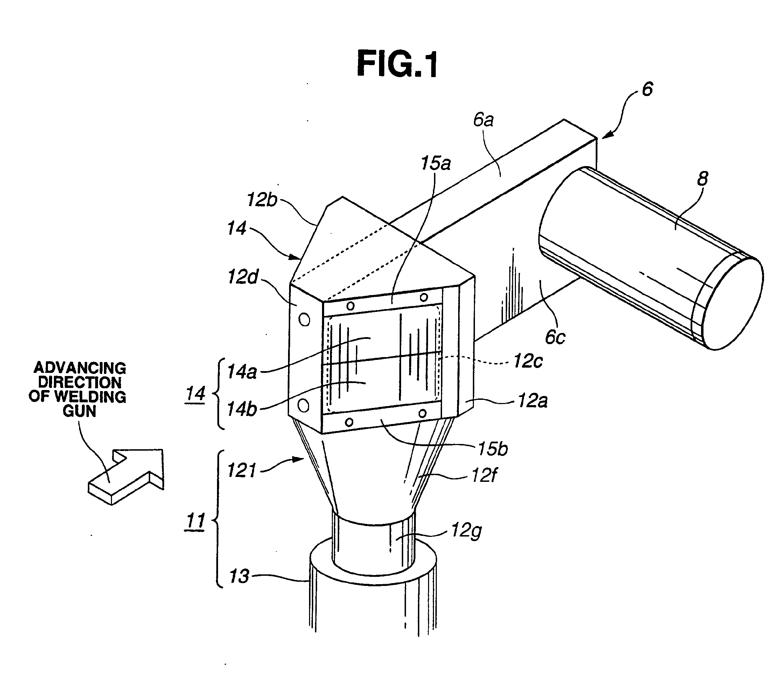

Furthermore, referring to Fig. 1, a tip dresser 6 for dressing the ends of the electrode tips 4 and 5 is disposed at a position not to interfere with welding work in a range of operation of the welding robot. A dresser main body 6a extends laterally from the tip dresser 6. The dresser main body 6a has a holder section 6b at the end thereof for holding a dressing body 7 such that it can be freely rotated or swung. The dresser main body 6a is shaped like a rectangular plane and is secured in such a manner that parallel table surfaces 6c and 6d are arranged substantially vertically, so called, sideways.

Accordingly, as shown in Fig. 2, the dressing body 7 is held by the holder section 6b in a state in which concave cutters 7a and 7b provided at both sides of the dressing body 7 and capable of dressing the ends of the electrode tips 4 and 5 into a desired shape by polishing or grinding are substantially horizontally oriented.

Also, a motor 8 is secured to the base of the dresser main body 6a for driving the dressing body 7 to rotate or swing. The motor 8 is not limited to an air motor using compressed air as a driving source, but may be a common electric motor.

A chip collecting apparatus 11 includes a chip pickup case 121 attached to the end of the dresser main body 6a for covering the periphery of the holder section 6b, and a chip collection vessel 13 for collecting chips dropped from the chip pickup case 121.

Chip inserting surfaces 12a and 12b of the chip pickup case 121, which face the table surfaces 6c and 6d of the dresser main body 6a, are formed in a wedge shape extending from the end of the dresser main body 6a towards the base, and tip insertion ports 12c are opened in both the chip inserting surfaces 12a and 12b.

Furthermore, an end surface 12d in the converging direction of the chip inserting surfaces 12a and 12b of the chip pickup case 121 is fastened to the end surface of the dresser main body 6a with fastening screws or the like. An escape hole 12e, into which the dresser main body 6a inserted, is opened in the back of the chip pickup case 121. Also, a chip guide surface 12f is formed in a taper shape converging downwards under the chip pickup case 121, and a chip discharge port 12g is formed at the lower end of the chip guide surface 12f.

Each of the tip insertion ports 12c has a shielding member 14 disposed thereon. The shielding member 14 is composed of a pair of brushes 14a and 14b arranged to face each other at the upper and lower parts of the chip insertion port 12c. The brushes 14a and 14b are made of an elastic material such as nylon, and each base of which is fastened to the upper and lower edges of the chip insertion port 12c with screws via plates 15a and 15b.

The ends of both the brushes 14a and 14b are brought into contact with each other substantially at the center of the chip insertion port 12c to shield it. Since the shielding member 14 is provided to prevent chips generating when dressing the electrode tips 4 and 5 from flying off to the exterior through the chip insertion port 12c, air tightness is not required.

On the other hand, a chip collection vessel 13 is disposed under a chip discharge port 12g opened at the lower end of the chip pickup case 121. The chip collection vessel 13 may be hung from the chip discharge port 12g. When hanging from the chip pickup case 121, the chip collection vessel 13 is preferably lightweight; for example, it is possible to use the lower part of a plastic bottle, the upper part of which is cut, as a chip collection vessel 13.

Next, the operation of this embodiment with such a configuration will be discussed. When dressing the ends of the electrode tips 4 and 5 after spot welding work using a welding robot has been completed in a predetermined way, first, the pair of gun arms 2 and 3 provided for the welding gun 1 is advanced to the dresser main body 6a from the front thereof (in the direction of arrow in Fig. 1) in a state in which the opposed electrode tips 4 and 5 are horizontally held, in accordance with preset teaching.

Since the tip inserting planes 12a and 12b formed on both sides of the chip pickup case 121 are formed in a wedge shape expanding from the front end to the rear end with respect to the advancing direction of the pair of gun arms 2 and 3, the electrode tips 4 and 5 mounted at the ends of the gun arms 2 and 3 can be guided smoothly to the tip insertion ports 12c opened in the tip inserting surfaces 12a and 12b without expanding the space between the electrode tips 4 and 5.

Then, the electrode tips 4 and 5 are advanced from the tip insertion ports 12c into the chip pickup case 121. Each tip insertion port 12c is shielded by the brushes 14a and 14b extending from above and below, and when into which the electrode tips 4 and 5 attached to the ends of gun arms 2 and 3 are inserted, the brushes 14a and 14b are elastically deformed along the bases of the electrode tips 4 and 5 and the ends of the gun arms 2 and 3 holding the bases, and close the peripheries of the bases of the electrode tips 4 and 5 and the ends of the gun arms 2 and 3 holding the bases.

When the central axes of the electrode tips 4 and 5 face the central axis of the dressing body 7 held by the holder section 6b, the electrode tips 4 and 5 are relatively moved to be close to each other and to bring them into contact with the cutters 7a and 7b provided on both sides of the dressing body 7, thereby tightly pressing the dressing body 7.

The dressing body 7 is driven to rotate or swing by the motor 8 such as an air motor provided for the dresser main body 6a and dresses the ends of the electrode tips 4 and 5 in a predetermined way by polishing or grinding them with the cutters 7a and 7b provided for the dressing body 7.

In this case, since the dresser main body 6a is supported in a state in which the table surfaces 6c and 6d are in upright positions, chips generated when dressing the electrode tips 4 and 5 are dropped downwards through a gap formed between the table surfaces 6c and 6d and the inner peripheral surface of the chip pickup case 121. Thus dropped chips are converged along the chip guide surface 12f formed under the chip pickup case 121 and are collected through the chip discharge port 12g into the chip collection vessel 13 disposed under the chip discharge port 12g.

On the other hand, when dressing of the electrode tips 4 and 5 is completed in a predetermined way, the first and second gun arms 2 and 3 are separated from the dresser main body 6a by a reverse operation from that when inserting with the welding robot, and are brought into a standby state for the next spot welding.

When the chips collected in the chip collection vessel 13 reach a predetermined amount, or periodically, the chips collected in the chip collection vessel 13 are recycled.

According to this embodiment, as described above, since the table surfaces 6c and 6d are in upright positions and the periphery of the holder section 6b for holding the dressing body 7 is covered by the chip pickup case 121, chips generated when dressing the electrode tips 4 and 5 can be dropped downwards from the table surfaces 6c and 6d sides of the dresser main body 6a and collected, the structure of the chip collecting apparatus 11 is simplified and a more lightweight and compact apparatus can be provided.

Also, since the tip inserting surfaces 12a and 12b of the chip pickup case 121 are formed in a wedge shape expanding from the front end to the rear end with respect to the advancing direction of the welding gun 1, the electrode tips 4 and 5 can be guided smoothly into the tip insertion ports 12c without unnecessarily increasing the space between the electrode tips 4 and 5 held by the gun arms 2 and 3; therefore, workability is improved. Accordingly, even an X-type welding gun, which cannot much increase the space between the pair of electrode tips 4 and 5, can guide the electrode tips 4 and 5 smoothly into the tip insertion ports 12c.

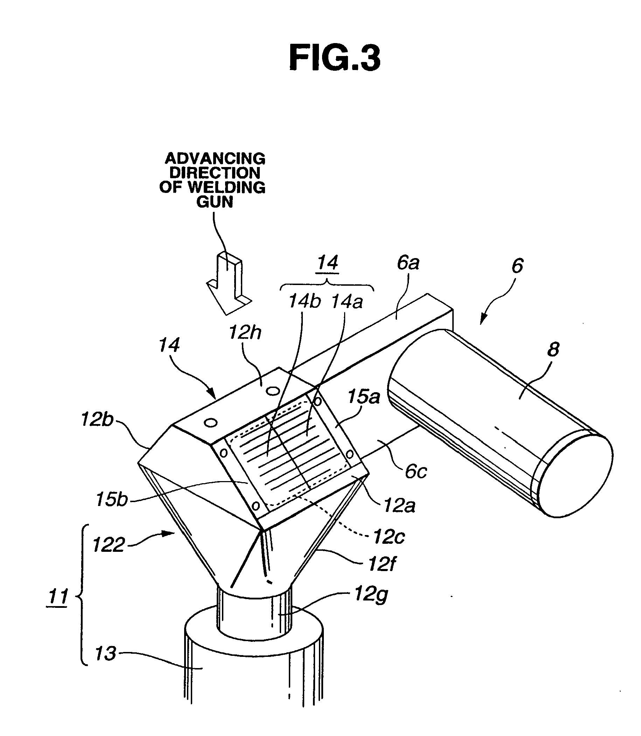

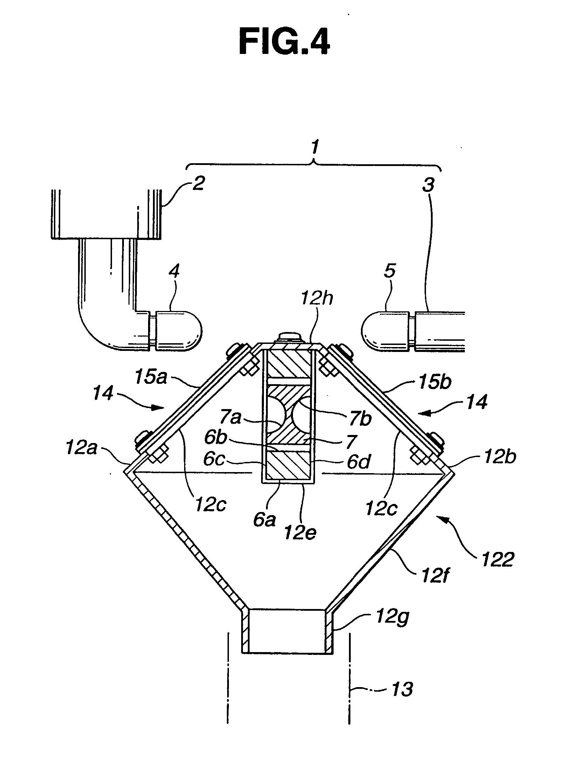

Figs. 3 and 4 show a second embodiment of the invention.

In the aforesaid first embodiment, a case in which the welding gun 1 is advanced to the dresser main body 6a in a state in which the opposite electrode tips 4 and 5 are advanced from the front of the dresser main body 6a in a horizontal position; however, in this embodiment, a case of moving down the opposite electrode tips 4 and 5 from above of the dresser main body 6a in a horizontal position will be discussed.

The tip inserting surfaces 12a and 12b of the chip pickup case 122 are formed in a wedge shape expanding from the upper surface of the dresser main body 6a (front end with respect to the advancing direction of the welding gun 1) downwards (towards the rear end with respect to the advancing direction of the welding gun 1), and an upper end surface 12h of the tip inserting surfaces 12a and 12b is secured to the dresser main body 6a with a clamping screw or the like.

Furthermore, the pair of brushes 14a and 14b constituting the shielding member 14 is arranged in front and rear to face each other in the tip insertion ports 12c opened in the tip inserting surfaces 12a and 12b, and is fixed with the plates 15a and 15b.

With such a configuration, since the tip inserting surfaces 12a and 12b provided at the chip pickup case 122 are formed in a wedge shape expanding from the front end to the rear end with respect to the advancing direction of the pair of gun arms 2 and 3 (the direction of the arrow in Fig. 3), the electrode tips 4 and 5 attached to the ends of the gun arms 2 and 3 can be guided smoothly into the tip insertion ports 12c without unnecessarily increasing the space between the electrode tips 4 and 5. Since operational effects other than that are similar to those of the first embodiment, a description thereof will be omitted.

Having described the preferred embodiments of the invention referring to the accompanying drawings, it should be understood that the present invention is not limited to those precise embodiments and various changes and modifications thereof could be made by one skilled in the art without departing from the scope of the invention as defined in the appended claims.

According to the present invention, as described above, the collection rate of chips generated during dressing electrode tips can be increased and the rate of recycle can be improved.

Also, the structure of the chip pickup case is simple, thereby achieving downsizing and high versatility.

## Claims

1. A chip collecting apparatus for a tip dresser (6), comprising a tip dresser (6) for dressing a pair of opposite electrode tips (4, 5) by tightly pressing a dressing body (7) held in a dresser main body (6a) with the pair of electrode tips (4, 5) and relatively sliding the dressing body (7) and the pair of electrode tips (4, 5),
wherein a chip pickup case (121, 122) is secured to the dresser main body (6a) for covering the dressing body (7);
tip insertion points (12c) are opened respectively at positions of the chip pickup case (121, 122), into which the pair of electrode tips (4, 5) are insertable;
a shielding member (14) is disposed at each of the tip insertion ports (12c) for allowing the insertion of the electrode tips (4, 5) by elastic deformation;
a chip discharge port (12g) is provided under the chip pickup case (121, 122);
the dresser main body (6a) is supported in a state in which cutters (7a, 7b) provided on both sides of the dressing body (7) are oriented in a substantially horizontal direction, and surfaces of the chip pickup case (121, 122), in which the tip insertion ports (12c) are opened, are formed in a wedge shape expanding from the front end to the rear end with respect to the advancing direction of the pair of electrode tips (4, 5); and
the advancing direction of the pair of electrode tips (4, 5) is one of horizontal and upward.

2. The chip collecting apparatus for the tip dresser (6), according to claim 1, **characterized in that** the surfaces of the chip pickup case (121, 122) which face the dressing body (7) are brought in close vicinity of the dressing body (7);
the tip insertion ports (12c) are opened in the facing surfaces; and
an insertion port (12c) for the dresser main body (6a) is opened at the rear of the chip pickup case (121, 122).

## Patentansprüche

1. Spansammelvorrichtung für eine Spitzenabrichteinrichtung (6), wobei die Spansammelvorrichtung aufweist: eine Spitzenabrichteinrichtung (6) zum Abrichten von einem Paar von gegenüberliegenden Elektrodenspitzen (4, 5) durch festes Andrücken des Paars von Elektrodenspitzen (4, 5) an einen Abrichtkörper (7), der in dem Hauptkörper (6a) der Abrichteinrichtung gehalten wird, und durch relatives Gleitbewegen des Abrichtkörpers (7) und des Paars von Elektrodenspitzen (4, 5),
wobei ein Spanaufnahmegehäuse (121, 122) an dem Hauptkörper (6a) der Abrichteinrichtung befestigt ist, um den Abrichtkörper (7) abzudecken;
Spitzeneinführöffnungen (12c) jeweils an Positionen des Spanaufnahmegehäuses (121, 122) geöffnet werden, in die das Paar von Elektrodenspitzen (4, 5) einsetzbar ist;
ein Abschirmelement (14) an jeder von den Spitzeneinführöffnungen (12c) angeordnet ist, welches das Einführen der Elektrodenspitzen (4, 5) durch elastische Verformung gestattet;
eine Spanaustragöffnung (12g) unter dem Spanaufnahmegehäuse (121, 122) vorgesehen ist;
der Hauptkörper (6a) der Abrichteinrichtung in einem Zustand abgestützt wird, in dem Schneideinrichtungen (7a, 7b), die an beiden Seiten des Abrichtkörpers (7) vorgesehen sind, in einer im Wesentlichen horizontalen Richtung orientiert sind, und Oberflächen des Spanaufnahmegehäuses (121, 122), in denen die Spitzeneinführöffnungen (12c) geöffnet werden, in einer Keilform ausgebildet sind, die sich von dem Vorderende zu dem Hinterende in Bezug auf die Vorrückrichtung des Paars von Elektrodenspitzen (4, 5) erweitert; und
die Vorrückrichtung des Paars von Elektrodenspitzen (4, 5) eine von einer Horizontal- und einer Aufwärtsrichtung ist.

2. Spansammelvorrichtung für die Spitzenabrichteinrichtung (6) nach Anspruch 1, **dadurch gekennzeichnet, dass** die Oberflächen des Spanaufnahmegehäuses (121, 122), die dem Abrichtkörper (7) zugewandt sind, in enge Nähe zu dem Abrichtkörper (7) gebracht werden;
die Spitzeneinführöffnungen (12c) in den zugewandten Oberflächen geöffnet werden; und
eine Einführöffnung (12c) für den Hauptkörper (6a) der Abrichteinrichtung an der Rückseite des Spanaufnahmegehäuses (121, 122) geöffnet wird.

## Revendications

1. Appareil collecteur de copeaux destiné à un outil de dressage (6), comprenant un outil de dressage (6) destiné à dresser une paire de pointes d'électrodes (4, 5) opposées en serrant fermement un corps de dressage (7) maintenu dans un corps principal d'outil de dressage (6a) avec la paire de pointes d'électrodes (4, 5) et en faisant relativement coulisser le corps de dressage (7) par rapport à la paire de pointes d'électrodes (4, 5)
dans lequel un boîtier de ramassage de copeaux (121, 122) est fixé sur le corps principal d'outil de dressage (6a) pour couvrir le corps de dressage (7);
des points d'insertion de pointes (12c) sont ouverts respectivement en des positions du boîtier de ramassage de copeaux (121, 122) dans lesquelles la paire de pointes d'électrodes (4, 5) est susceptible d'être insérée ;
un élément de protection (14) est disposé au niveau de chacun des orifices d'insertion de pointes (12c) pour permettre l'insertion de pointes d'électrodes (4, 5) par déformation élastique ;
un orifice de déversement de copeaux (12g) est prévu sous le boîtier de ramassage de copeaux (121, 122) ;
le corps principal d'outil de dressage (6a) est soutenu dans un état dans lequel des lames (7a, 7b) prévues de part et d'autre du corps de dressage (7) sont orientées dans une direction sensiblement horizontale, et les surfaces du boîtier de ramassage de copeaux (121, 122) dans lesquelles sont ménagés les orifices d'insertion de pointes (12c), présentent une forme en coin s'étendant de l'extrémité avant vers l'extrémité arrière par rapport à la direction d'avancement de la paire de pointes d'électrodes (4, 5) ; et
la direction d'avancement de la paire de pointes d'électrodes (4, 5) est soit horizontale, soit orientée en direction du haut.

2. Appareil collecteur de copeaux destiné à un outil de dressage (6) selon la revendication 1, **caractérisé en ce que** les surfaces du boîtier de ramassage de copeaux (121, 122) qui font face au corps de dressage (7) sont amenées à proximité immédiate du corps de dressage (7);
les orifices d'insertion de pointes (12c) sont ouverts dans les surfaces opposées ; et
un orifice d'insertion (12c) destiné au corps principal d'outil de dressage (6a) est ouvert à l'arrière du boîtier de ramassage de copeaux (121, 122).
